(19) Europäisches Patentamt / European Patent Office / Office européen des brevets

(11) **EP 3 465 320 B1**

(12) **FASCICULE DE BREVET EUROPEEN**

(45) Date de publication et mention de la délivrance du brevet:
**20.05.2020 Bulletin 2020/21**

(51) Int Cl.:
*G02B 21/16* (2006.01)     *G01Q 60/22* (2010.01)
*G01N 21/64* (2006.01)     *G02B 27/56* (2006.01)

(21) Numéro de dépôt: **17726253.2**

(22) Date de dépôt: **23.05.2017**

(86) Numéro de dépôt international:
**PCT/EP2017/062440**

(87) Numéro de publication internationale:
**WO 2017/207360 (07.12.2017 Gazette 2017/49)**

(54) **DISPOSITIF ET PROCEDE D'ECLAIRAGE POUR MICROSCOPIE DE FLUORESCENCE A ONDE EVANESCENTE**

VORRICHTUNG UND VERFAHREN ZUR BEREITSTELLUNG VON BELEUCHTUNG FÜR FLUORESZENZMIKROSKOPIE MIT INTERNER TOTALREFLEXION

DEVICE AND METHOD FOR PROVIDING ILLUMINATION FOR TOTAL-INTERNAL-REFLECTION FLUORESCENCE MICROSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2016 FR 1654885**

(43) Date de publication de la demande:
**10.04.2019 Bulletin 2019/15**

(73) Titulaire: **Centre National de la Recherche Scientifique**
**75016 Paris (FR)**

(72) Inventeurs:
- **GIACOMOTTI, Alejandro**
  **92146 Clamart (FR)**
- **BRUNSTEIN, Maia**
  **Bariloche 9500 (AR)**
- **CATTONI, Andrea**
  **92160 Antony (FR)**
- **BOUCHOULE, Sophie**
  **94800 Villejuif (FR)**
- **DAMILANO, Benjamin**
  **06102 Nice (FR)**
- **LEFEBVRE, Denis**
  **06560 Valbonne (FR)**

(74) Mandataire: **Priori, Enrico et al**
**Marks & Clerk France**
**Immeuble "Visium"**
**22, avenue Aristide Briand**
**94117 Arcueil Cedex (FR)**

(56) Documents cités:
EP-A1- 1 425 570        FR-A1- 2 943 428
US-A1- 2013 278 742     US-A1- 2014 104 680
US-B2- 7 545 496

- SRINIVASAN RAMACHANDRAN ET AL: "High performance, LED powered, waveguide based total internal reflection microscopy", SCIENTIFIC REPORTS, vol. 3, 4 juillet 2013 (2013-07-04), XP055336213, DOI: 10.1038/srep02133

## Description

L'invention porte sur un dispositif d'éclairage pour microscopie de fluorescence à onde évanescente, ainsi que sur un procédé de microscopie de fluorescence à onde évanescente utilisant un tel dispositif.

La microscopie de fluorescence à onde évanescente (TIRF, de l'anglais « Total Internai Reflection Fluorescence ») est une technique de microscopie de fluorescence dans laquelle l'excitation des molécules fluorescentes contenues dans l'échantillon observé est confinée à une région d'épaisseur nanométrique, située à proximité immédiate de la lamelle porte-échantillon. Elle permet, en particulier, d'observer de manière sélective des structures et processus localisés sur une membrane cellulaire, avec une résolution spatiale dans une direction axiale bien meilleure que la limite de diffraction. En outre, par rapport aux techniques d'épi-fluorescence plus conventionnelles, elle permet d'obtenir un meilleur contraste de l'image de fluorescence et de réduire les effets de photo-blanchiment.

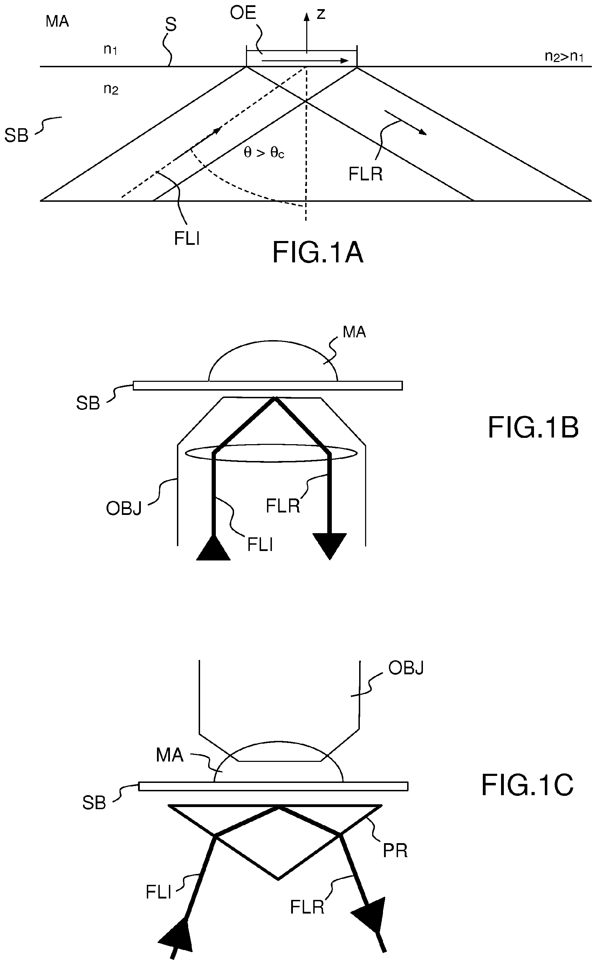

Le principe à la base de la microscopie de fluorescence à onde évanescente est illustré sur la figure 1A. On considère le cas d'un substrat SB d'indice de réfraction $n_2$, présentant une surface S en contact avec un milieu ambiant MA d'indice $n_1 < n_2$. Par exemple, le substrat SB peut être constitué par une lamelle porte-échantillon, ou par un élément en verre sur lequel est posée une telle lamelle, tandis que le milieu ambiant MA peut être une solution aqueuse contenant, en suspension, des cellules marquées par des fluorophores. Un faisceau lumineux FLI, provenant du substrat SB, est incident sur la surface S ; sa direction de propagation forme avec la normale **z** à la surface un angle $\theta$ supérieur à une valeur critique $\theta_c$ (angle limite)

$$\theta_c = arcsin\frac{n_1}{n_2}.$$ Par conséquent le faisceau FLI subit une réflexion totale interne (la référence FLR désigne le faisceau réfléchi) et une onde évanescente OE apparait dans le milieu ambiant MA. Cette onde évanescente présente une intensité qui décroit exponentiellement avec la distance z de la surface S : $I(z) = I_0 e^{-z/\delta}$, où la longueur de pénétration $\delta$ est donnée par

$$\delta = \frac{\lambda}{\sqrt{4\pi\left(n_2^2 sin^2\theta - n_1^2\right)}},$$ $\lambda$ étant la longueur

d'onde du rayonnement lumineux. L'onde évanescente excite les fluorophores contenus dans le milieu ambiant, mais seulement sur une épaisseur de l'ordre de $\delta$, car au-delà son intensité devient rapidement négligeable. A titre d'exemple, pour $\lambda$=488 nm, $n_2$=1,514 (verre BK7), $n_1$=1,33 (eau) et $\theta$=67°>$\theta_c$≅61,45°, on trouve $\delta$≅93 nm, ce qui signifie que seuls les fluorophores situés dans une couche d'environ 100 nm d'épaisseur sont excités et contribuent à la réalisation d'une image de fluorescence.

Les figures 1B et 1C illustrent deux configurations normalement utilisées en microscopie TIRF.

Dans le cas de la figure 1B, un même objectif de microscope OBJ, situé du coté du substrat opposé au milieu MA, est utilisé à la fois pour générer les ondes évanescentes par réflexion totale interne et pour collecter le rayonnement de fluorescence. L'objectif est généralement du type à immersion dans l'huile et peut présenter une ouverture numérique (O.N.) importante, par exemple de l'ordre de 1,45, ce qui permet à son tour d'obtenir une résolution spatiale latérale (perpendiculairement à la direction z) élevée car la résolution spatiale latérale est donnée par d=λ/2O.N. Par contre, un tel objectif présente un coût très élevé et introduit des aberrations significatives.

Dans le cas de la figure 1C, on utilise un prisme PR pour générer les ondes évanescentes, et un objectif OBJ immergé dans le milieu MA pour collecter le rayonnement de fluorescence. L'objectif OBJ de cette configuration est du type à immersion dans l'eau et présente généralement une ouverture numérique modérée, de l'ordre de 1,1. Par rapport à la configuration de la figure 1B on perd en résolution spatiale, mais on réduit le coût et les aberrations. Par contre, l'utilisation d'un prisme rend cette configuration plus complexe et laborieuse à mettre en œuvre.

Plusieurs configurations alternatives ont été proposées dans la littérature scientifique.

L'article de A. Hassanzadeh et al. « Waveguide evanescent field fluorescence microscopy : Thin film fluorescence intensifies and its application in cell biology » Applied Physics Letters 92, 233503 (2008) décrit une configuration dans laquelle un guide d'onde planaire est utilisé en tant que support porte échantillon. Un faisceau lumineux émis par une source externe est couplé dans le guide grâce à un réseau de diffraction. Le principal inconvénient de cette approche est constitué par la complexité de la procédure d'alignement, qui nécessite l'intervention d'un opérateur spécialisé. Un microscope basé sur ce principe ne peut donc pas être utilisé simplement par un biologiste sans expérience dans l'alignement de systèmes optiques.

L'article de A. Asanov et al. « A novel form of Total Internal Reflection Fluorescence Microscopy (LG-TIRFM) reveals different and independent lipid raft domains in living cells », Biochimica et Biophysica Acta 1801 (2010), 147 - 155 divulgue un montage similaire, présentant sensiblement les mêmes avantages et inconvénients, mais dans lequel la lumière est couple dans un guide d'onde planaire servant de porte échantillon au moyen d'un conditionneur de faisceau.

L'article de S. Ramachandran et al. « High performance, LED powered, waveguide based total internal reflection microscopy», Scientific reports 3 : 2133 (2013) divulgue l'utilisation, en tant que support porte échantillon, d'un guide d'onde planaire en forme de disque. Des diodes électroluminescentes (DEL) agencées autour de ce guide injectent de la lumière dans ce dernier par sa tranche. Le principal inconvénient de cette approche est son efficacité extrêmement faible. Si on considère le cas d'une DEL présentant un cône d'émission d'ouverture égale à 140° situé à 3 mm du bord du guide d'onde, un guide d'onde en forme de disque de 25 mm de diamètre et 0,17 mm d'épaisseur et on s'intéresse à la fraction de la lumière émise qui atteint une région centrale du disque de 1 mm$^2$ de surface, on trouve une efficacité de couplage de l'ordre de 0,05%. Et encore cette valeur constitue une approximation par excès, car on néglige la réflexion par la face d'entrée et on ne considère par le fait que certains des rayons qui pénètrent dans le guide le font avec une direction de propagation qui ne permet pas de réflexion totale interne. Ainsi, il est nécessaire d'utiliser plusieurs DELs de forte puissance, qui sont coûteuses et engendrent un échauffement du substrat pouvant s'avérer problématique.

L'invention vise à surmonter les inconvénients précités de l'art antérieur. Plus particulièrement, elle vise à procurer un dispositif d'éclairage pour microscopie de fluorescence à onde évanescente qui soit à la fois économique et simple à utiliser.

Un objet de l'invention permettant d'atteindre ce but est un dispositif d'éclairage pour microscopie de fluorescence à onde évanescente comprenant :

- un substrat transparent à la lumière dans au moins une plage spectrale et présentant, dans ladite plage spectrale, un indice de réfraction supérieur à celui de l'eau;
- au moins un dispositif émetteur de lumière agencé à l'intérieur dudit substrat, adapté pour émettre un rayonnement lumineux dans ladite plage spectrale en direction d'une surface du substrat, ledit dispositif émetteur de lumière étant agencé de telle sorte qu'au moins une portion dudit rayonnement atteigne ladite surface avec un angle d'incidence supérieur ou égal à un angle limite de réflexion totale interne pour une interface entre ledit substrat et de l'eau ; et
- au moins un masque opaque, agencé à l'intérieur ou à la surface dudit substrat de manière à intercepter une portion dudit rayonnement qui, en l'absence dudit masque, atteindrait ladite surface avec un angle d'incidence inférieur audit angle limite.

Selon des modes de réalisation particuliers d'un tel dispositif d'éclairage :

- Ledit ou au moins un dit dispositif émetteur de lumière peut présenter une émission lumineuse de type directionnel, avec un diagramme d'émission présentant un maximum suivant une direction oblique par rapport à ladite surface du substrat.
- Le dispositif d'éclairage peut comprendre une pluralité de dits dispositifs émetteurs de lumière présentant des émissions lumineuses de type directionnel avec des diagrammes d'émission présentant des maxima suivant des directions obliques respectives, différentes entre elles, par rapport à ladite surface du substrat.

- Le dispositif d'éclairage peut comprendre : soit une pluralité de dits dispositifs émetteurs de lumière, agencés de manière symétrique autour d'un axe perpendiculaire à ladite surface du substrat ; soit un dit dispositif émetteur de lumière en forme d'anneau.
- Le dispositif d'éclairage peut comprendre une pluralité de dits dispositifs émetteurs de lumière adaptés pour émettre ledit rayonnement lumineux dans des portions différentes de ladite plage spectrale.
- Le dispositif d'éclairage peut comprendre également : une première couche transparente, agencée à la surface dudit substrat et présentant un indice de réfraction inférieur à celui dudit substrat, de telle sorte qu'au moins une portion du rayonnement lumineux émis par ledit ou lesdits dispositifs émetteurs de lumière atteigne une interface entre le substrat et la première couche transparente avec un angle d'incidence supérieur ou égal à un angle limite de réflexion totale interne pour cette interface ; et une deuxième couche transparente, agencée à la surface de ladite première couche transparente opposée audit substrat, présentant un indice de réfraction supérieur à celui de ladite première couche ; lesdites première et deuxième couche présentant des épaisseurs inférieures à au moins une longueur d'onde du rayonnement lumineux émis par ledit ou lesdits dispositifs émetteurs de lumière.
- Le dispositif d'éclairage peut comprendre également une couche métallique déposée à sa surface éclairée par ledit ou lesdits dispositifs émetteurs de lumière.

Un autre objet de l'invention est un système de microscopie de fluorescence à onde évanescente comprenant :

- un tel dispositif d'éclairage ; et
- un objectif de microscope agencé pour observer une surface dudit dispositif d'éclairage, ou d'une lamelle de microscope posée sur ladite surface, et ayant un axe optique orthogonal à ladite surface et décalé par rapport au ou aux dispositifs émetteurs de lumière du dispositif d'éclairage.

Encore un autre objet de l'invention est un procédé d'éclairage pour microscopie de fluorescence à onde évanescente comprenant des étapes consistant à :

- mettre un substrat transparent à la lumière dans au moins une plage spectrale en contact avec un milieu présentant, dans ladite plage spectrale, un indice de réfraction inférieur à celui dudit substrat ;
- activer un dispositif émetteur de lumière agencé à l'intérieur dudit substrat transparent pour qu'il émette un rayonnement lumineux dans ladite plage spectrale en direction d'une surface du substrat, ledit dispositif émetteur de lumière étant agencé de telle sorte qu'au moins une portion dudit rayonnement atteigne ladite surface avec un angle d'incidence supérieur ou égal à un angle limite de réflexion totale interne pour une interface entre ledit substrat et ledit milieu optique ;

moyennant quoi des ondes évanescentes sont générées à la surface dudit substrat.

Selon des modes de réalisation particuliers d'un tel procédé :

- Au moins un masque opaque peut être agencé à l'intérieur ou à la surface dudit substrat de manière à intercepter une portion dudit rayonnement qui, en l'absence dudit masque, atteindrait ladite surface avec un angle d'incidence inférieur audit angle limite.
- Ledit milieu peut être aqueux.
- Ledit ou au moins un dit dispositif émetteur de lumière peut présenter une émission lumineuse de type directionnel, avec un diagramme d'émission présentant un maximum suivant une direction oblique par rapport à ladite surface du substrat.
- Une première couche transparente peut être agencée à la surface dudit substrat, présentant un indice de réfraction inférieur à celui dudit substrat, de telle sorte qu'au moins une portion du rayonnement lumineux émis par ledit ou lesdits dispositifs émetteurs de lumière atteigne une interface substrat - première couche transparente avec un angle d'incidence supérieur ou égal à un angle limite de réflexion totale interne pour cette interface ; et une deuxième couche transparente peut être agencée à la surface de ladite première couche transparente opposée audit substrat, présentant un indice de réfraction supérieur à celui de ladite première couche ; lesdites première et deuxième couche présentant des épaisseurs inférieures à au moins une longueur d'onde du rayonnement lumineux émis par ledit ou lesdits dispositifs émetteurs de lumière.
- Une couche métallique peut être agencée à la surface dudit substrat ou à sa proximité, de telle sorte que des plasmons de surface sont excités par lesdites ondes évanescentes.
- Un échantillon contenant au moins un fluorophore peut être amené en contact de la surface dudit substrat ou à sa proximité, de telle sorte qu'une émission fluorescente dudit fluorophore soit excitée par lesdites ondes évanescentes, ou des ondes évanescentes associées auxdits plasmons de surface, et au moins une image de fluorescence dudit échantillon peut être acquise au moyen d'un objectif de microscope.
- Ledit ou lesdits dispositifs émetteurs de lumière peuvent être agencés de telle sorte que lesdites ondes évanescentes présentent des longueurs de pénétration différentes en correspondance de différents points de la surface dudit substrat ; ledit substrat est déplacé par rapport audit échantillon, une pluralité d'images de fluorescence étant acquises pour une pluralité de différentes positions relative entre l'échantillon et le substrat, de telle sorte qu'un même point de l'échantillon soit exposé à des ondes évanescentes de longueurs de pénétration différentes ; le procédé pouvant comprendre également une étape de reconstruction d'une image tridimensionnelle d'une distribution des fluorophores à l'intérieur de l'échantillon à partir desdites images de fluorescence.

D'autres caractéristiques, détails et avantages de l'invention ressortiront à la lecture de la description faite en référence aux dessins annexés donnés à titre d'exemple et qui représentent, respectivement :

- les figures 1A à 1C, la technique de microscopie à onde évanescente connue de l'art antérieur ;
- les figures 2 et 3A à 3C, un premier mode de réalisation de l'invention ;
- la figure 4, un deuxième mode de réalisation de l'invention ;
- la figure 5, un troisième mode de réalisation de l'invention ;
- les figures 6A à 6C, un quatrième mode de réalisation de l'invention ;
- la figure 7, un cinquième mode de réalisation de l'invention ;
- les figures 8A et 8B, deux variantes d'un sixième mode de réalisation de l'invention ; et
- la figure 9, un septième mode de réalisation de l'invention.

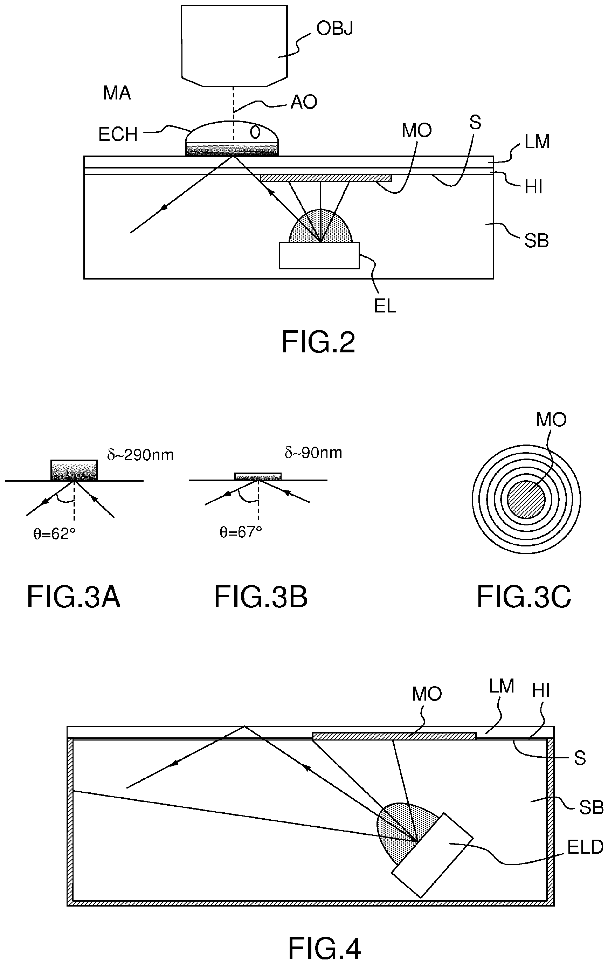

Le dispositif de la figure 2 comprend un substrat planaire SB en matériau transparent - plus précisément, transparent à la lumière dans au moins une plage spectrale dans le proche infrarouge, le visible ou le proche ultraviolet - à l'intérieur duquel est agencé un dispositif émetteur de lumière EL - typiquement un dispositif à semi-conducteur tel qu'une diode électroluminescente ou une extrémité d'une fibre optique dont l'extrémité opposée est couplée à une source lumineuse externe. Par exemple, le substrat SB peut être en matériau polymère, tel que du PDMS, et être réalisé par moulage, le dispositif EL ayant préalablement été placé dans le moule. La figure ne montre pas les connexions électriques du dispositif EL, qui sortent du substrat. Dans le mode de réalisation de la figure 2, le dispositif EL présente une émission non directionnelle, l'intensité lumineuse émise dans une direction étant proportionnelle au cosinus de l'angle formé entre ladite direction et la normale à la surface d'émission du dispositif (loi de Lambert). Cette surface d'émission est parallèle à une surface S du substrat SB, sur laquelle est posée une lamelle de microscope LM, par exemple en verre ; une huile d'immersion HI (ou tout autre matériau permettant une adaptation des indices de réfraction) est avantageusement interposée entre la surface S et la lamelle LM. La surface de la lamelle du côté opposé au substrat est en contact avec un milieu ambiant MA, par exemple une solution aqueuse, présentant un indice de réfraction inférieur à ceux du substrat SB et de la lamelle LM. En variante, le substrat SB lui-même peut servir de lamelle de microscope.

Un masque opaque MO est agencé à proximité de la surface S (à l'intérieur du substrat, ou du côté externe de la surface) directement au-dessus du dispositif émetteur de lumière EL, de manière à intercepter tous les rayons lumineux émis par ledit dispositif et susceptibles de parvenir à la surface S avec un angle d'incidence inférieur à l'angle limite. Ainsi, seul les rayons possédant des angles d'incidence supérieurs à l'angle limite parviennent à la lamelle de microscope LM et subissent une réflexion totale interne à la surface entre cette dernière et le milieu ambiant MA.

Un échantillon ECH, par exemple une cellule marquée avec un marqueur fluorescent (fluorophore), est positionné sur la lamelle de microscope, à une position excentrée par rapport au dispositif EL et au masque opaque MO. Plus particulièrement, l'échantillon est positionné en correspondance d'une région de la surface de la lamelle où des ondes évanescentes OE, produites par la réflexion totale interne du rayonnement lumineux émis par le dispositif EL, sont présentes. D'une manière connue en soi, ces ondes évanescentes excitent la fluorescence des fluorophores contenus dans l'échantillon ; un objectif de microscope OBJ, du type à immersion dans l'eau, positionné au-dessus de l'échantillon avec un axe optique OA perpendiculaire à la surface S, est utilisé pour recueillir le rayonnement de fluorescence et former une image de la répartition spatiale des fluorophores.

On remarquera qu'il n'est pas indispensable que le masque opaque intercepte tous les rayons lumineux présentant un angle d'incidence inférieur à l'angle limite ; il suffit que cela se produise sur une région de la surface S. Par exemple, dans le cas de la figure 2, le masque MO peut laisser passer des rayons d'angle d'incidence inférieur à l'angle limite se propageant dans une direction opposée à celle où se trouvent l'échantillon et l'objectif. Il est cependant préférable que le masque MO intercepte au moins la plus grande partie des rayons lumineux ayant un angle d'incidence inférieur à l'angle limite, de manière à minimiser la lumière parasite susceptible de parvenir à l'objectif.

L'ensemble constitué par le substrat SB, le masque opaque MO et le dispositif émetteur de lumière EL est indépendant de l'échantillon et de l'objectif, et est donc facilement réutilisable. Par ailleurs, peut être très peu couteux, et sa structure « monolithique » évite d'avoir à effectuer des opérations complexes d'alignement.

Une caractéristique intéressante du dispositif de la figure 2 est que la longueur de pénétration δ des ondes évanescentes OE n'est pas constante sur toute la surface S, mais dépend de l'angle d'incidence des rayons lumineux ; elle varie donc en fonction de la distance par rapport à la verticale du dispositif EL. Les figures 3A et 3B montrent que pour une longueur d'onde λ=488 nm, en supposant un substrat d'indice de réfraction égal à 1,514 et un milieu ambiant aqueux, la profondeur de pénétration varie de 290 nm à 90 nm lorsque l'angle d'incidence passe de 62° à 67°. La figure 3C montre des courbes d'iso-longueur de pénétration formant des cercles autour du masque opaque MO. Cela est avantageux, car il suffit de décaler latéralement le substrat SB par rapport à la lamelle de microscope LM pour choisir une longueur de pénétration adaptée à une application particulière. Il est même possible d'acquérir plusieurs images de fluorescence d'un même échantillon avec des longueurs de pénétration différentes. En soustrayant ces images deux à deux il est possible de reconstruire, par tranches, la distribution tridimensionnelle de fluorophores, et cela avec une résolution nanométrique dans une direction axiale.

On considère le cas d'un dispositif EL à émission non directionnelle situé 1,8 mm au-dessous de la surface S d'un substrat en PDMS (indice de réfraction 1,41), sur lequel est posée une lamelle de microscope en verre de 0,5 mm d'épaisseur ; le milieu ambiant est l'air. Dans ces conditions, la réflexion totale est atteinte au-delà d'une circonférence de diamètre égal à environ 4,5 mm, centrée autour de la normale à la surface S passant par le centre du dispositif EL. Des ondes évanescentes sont générées sur une couronne circulaire dont le diamètre externe atteint 11 mm. Sur une surface de 1 mm² à une distance horizontale de 5 mm de la normale à la surface S passant par le centre du dispositif EL, on récupère 0,7% de l'intensité lumineuse totale émise par le dispositif. Cette efficacité est supérieure de plus d'un ordre de grandeur s à celle atteinte en utilisant la configuration proposée dans l'article précité de S. Ramachandran et al. Il faut néanmoins reconnaître que cette efficacité reste relativement faible ; d'autres modes de réalisation de l'invention permettent de l'améliorer.

La manière la plus simple d'obtenir un tel résultat consiste à remplacer l'émetteur non directionnel de la figure 2 par un dispositif émetteur de lumière directionnel ELD (par exemple une diode super luminescente ou un laser à semi-conducteur) dont le diagramme d'émission présente un maximum suivant une direction inclinée par rapport à la normale à la surface S ; de préférence, cette direction forme avec la normale à la surface S un angle supérieur à l'angle limite. Cela est illustré par la figure 3. Dans certains cas, si l'émission du dispositif ELD est suffisamment directionnelle, le masque opaque MP peut être omis.

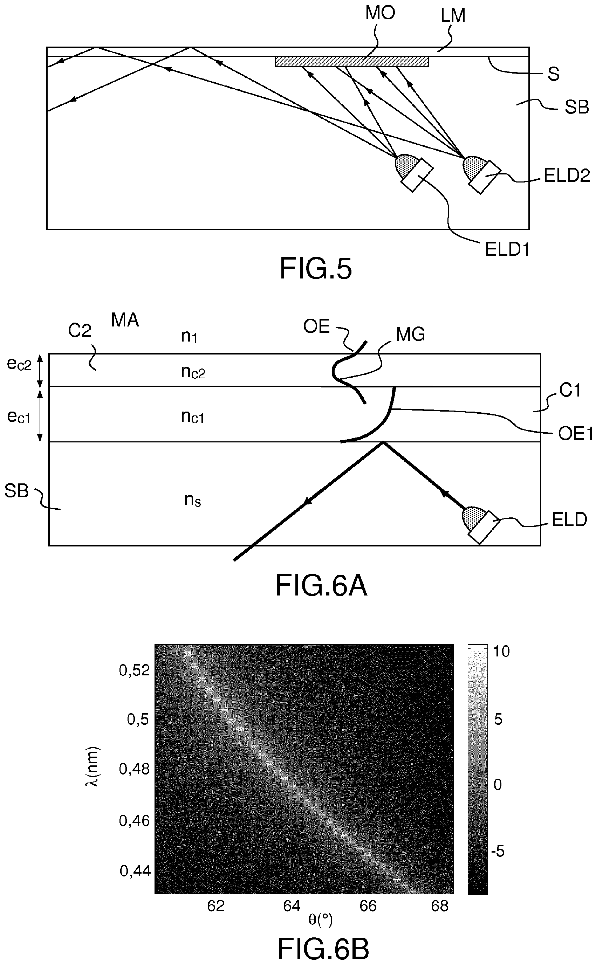

La figure 5 illustre une variante dans laquelle plusieurs dispositifs émetteur de lumière directionnels ELD1, ELD2 sont agencés les uns à côtés des autres. Ces dispositifs présentent des diagrammes d'émission ayant des maxima selon des directions différentes, de manière à définir à la surface S du substrat des régions caractérisées par des longueurs de pénétration des ondes évanescentes différentes, comme cela a été décrit en référence aux figures 3A - 3C.

Une amplification de l'onde évanescente générée dans le milieu ambiant MA peut également être obtenue en piégeant le rayonnement lumineux d'excitation dans un guide d'onde planaire à la surface du substrat SB. Une telle configuration est illustrée sur la figure 6A. Plus précisément, une première couche transparente C1, d'épaisseur $e_{c1}$ et indice de réfraction $n_{c1}$ recouvre la surface S du substrat SB ; une deuxième couche transparente C2 d'épaisseur $e_{c2}$ et indice de réfraction $n_{c2}$ est agencée au-dessus de la première couche, en contact avec le milieu ambiant. Les épaisseurs $e_{c1}$ et $e_{c2}$ n'excèdent pas la longueur d'onde du rayonnement lumineux émis par le dispositif émetteur de lumière (non représenté) contenu dans le volume du substrat. De préférence, la couche C2 est directement en contact avec le milieu ambiant MA et l'échantillon à observer, sans interposition d'une lamelle de microscope séparée du substrat.

L'indice de réfraction $n_{c1}$ de la première couche transparente est inférieur à celui, $n_s$, du substrat : $n_{c1} < n_s$ ; par conséquent il existe un angle limite tel que les rayons lumineux provenant du substrat et parvenant à sa surface S avec un angle d'incidence supérieur à cet angle limite subissent une réflexion totale interne. Ainsi, une onde évanescente OE1 est générée dans la couche C1.

L'indice de réfraction $n_{c2}$ de la deuxième couche transparente est supérieur à la fois à celui de la première couche transparente et à celui, $n_1$, du milieu ambiant : $n_{c2} > n_{c1}$ ; $n_{c2} > n_1$. Dans ces conditions, la deuxième couche transparente constitue un guide d'onde planaire. L'onde évanescente OE1 générée dans la première couche transparente excite un mode guidé MG de ce guide, ce qui provoque l'apparition d'une onde évanescente OE dans le milieu ambiant - comme dans les autres modes de réalisation. Des simulations numériques permettent de vérifier que, pour un angle d'incidence particulier, l'intensité de l'onde évanescente dans le milieu MA est augmentée très sensiblement (jusqu'à trois ordres de grandeur) par rapport au cas de la figure 2, où les couches transparentes C1 et C2 ne sont pas présentes.

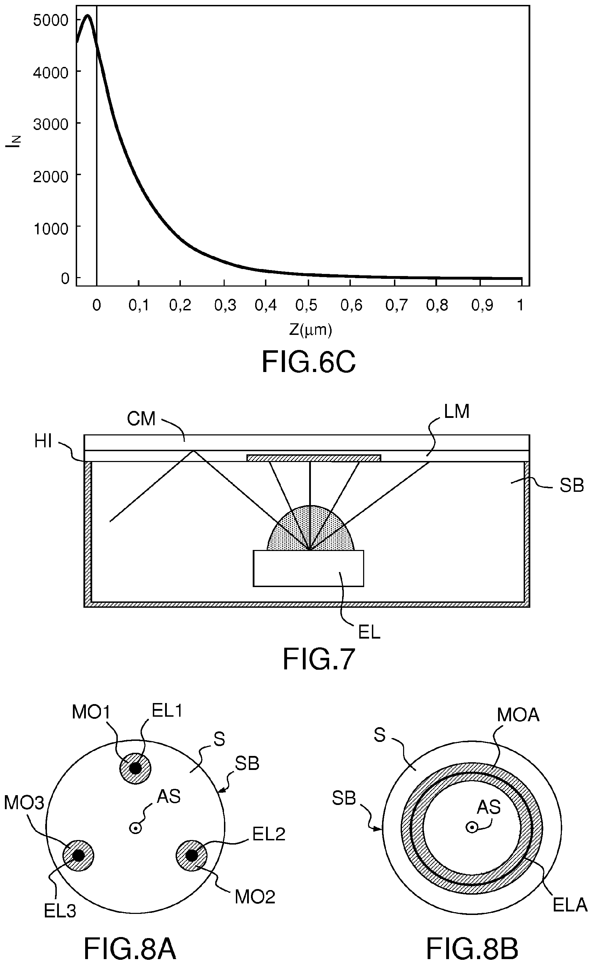

Des simulations numériques ont été effectuées dans le cas $\lambda = 470$ nm, $n_s = 1,52$, $n_{c1} = 1,23$, $e_{c1} = 450$ nm, $n_{c2} = 1,7$, $e_{c2} = 290$ nm, $n_1 = 1,33$ (milieu ambiant constitué par de l'eau). La figure 6B est un graphique représentant, en échelle logarithmique, l'intensité du champ évanescent en fonction de l'angle d'incidence $\theta$ et de la longueur d'onde $\lambda$, pour une polarisation TE (champ électrique perpendiculaire au plan d'incidence). On peut remarquer que l'intensification du champ évanescent ne se produit qu'à un angle d'incidence déterminé, fonction de la longueur d'onde. La figure 6C montre le profil spatial d'intensité normalisée (par rapport à l'intensité incidente) $I_N$ du champ évanescent, en fonction de la distance z de la surface de la couche C2, pour un angle d'incidence optimal, égal à 64,2°. La longueur de pénétration est de l'ordre de 110 nm.

Une autre possibilité, illustrée sur la figure 7, consiste à déposer une couche métallique mince CM (quelques nanomètres ou dizaines de nanomètres) sur la surface de la lamelle de microscope LM (cas illustré sur la figure) ou sur la surface S du substrat, si une lamelle de microscope distincte n'est pas présente. En choisissant de manière opportune l'épaisseur de la couche CM, la longueur d'onde du rayonnement lumineux et son angle d'incidence il est possible de générer des plasmons de surface, qui amplifient grandement les ondes évanescentes. Cet effet a été décrit, dans une configuration d'éclairage tout à fait différente, dans l'article de K. Balaa et E. Fort « Surface Plasmon Enhanced TIRF Imaging », Imaging & Microscopy - Octobre 2009.

Le mode de réalisation simple de la figure 2 ne permet pas d'obtenir un éclairage (plus précisément, une excitation d'ondes évanescentes) homogène, car les rayons lumineux incidents sur la surface S proviennent d'une seule direction. Comme illustré sur la figure 8A, pour obtenir un éclairage plus uniforme, il est possible d'utiliser une pluralité de dispositifs émetteurs de lumière EL1, EL2, EL3, chacun pourvu d'un masque opaque respectif, MO1, MO2, MO3, agencés de manière symétrique autour d'un axe perpendiculaire à la surface S du substrat. La région utile de la surface S, où doit être positionné l'échantillon à observer, se trouve dans le voisinage de cet axe. Il est également possible d'utiliser un dispositif émetteur de forme annulaire ELA - par exemple une diode électroluminescente fabriquée sur mesure - avec un masque opaque MOA en forme de couronne circulaire.

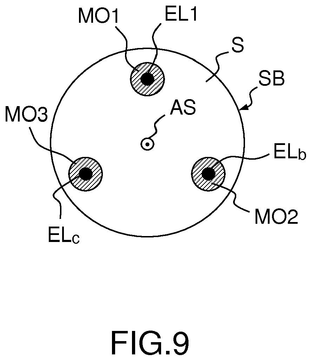

Dans certaines applications, l'échantillon peut contenir plusieurs types de fluorophores, présentant des longueurs d'onde d'excitation différentes. Un dispositif d'éclairage selon un mode de réalisation de l'invention peut alors comprendre, de manière avantageuse, une pluralité de dispositifs émetteurs de lumière, présentant des longueurs d'onde d'émission différentes, adaptées pour exciter la fluorescence de fluorophores respectifs. Ces dispositifs peuvent être activés de manière simultanée ou en séquence. La figure 9 illustre un mode de réalisation de l'invention comprenant trois de ces dispositifs émetteurs de lumière ELa, ELb, ELc, agencés de manière symétrique autour d'un axe AS et pourvus chacun d'un masque opaque respectif MO1, MO2, MO3.

Ces différents modes de réalisation peuvent être combinés entre eux. Ainsi, par exemple, il est possible d'agencer de manière symétrique autour d'un axe une pluralité de groupes de dispositifs émetteurs, éventuellement directionnels, chaque dispositif d'un groupe présentant une longueur d'onde d'émission différente. De même, l'utilisation d'un guide d'onde ou d'une couche métallique pour amplifier les ondes évanescentes est compatible avec celle de dispositifs d'émission directionnels. Il est également possible de combiner, dans un même dispositif, l'utilisation d'un guide d'onde (cf. figure 6A) et une couche métallique (cf. figure 4).

**Revendications**

1. Dispositif d'éclairage pour microscopie de fluorescence à onde évanescente comprenant :

   - un substrat (SB) transparent à la lumière dans au moins une plage spectrale et présentant, dans ladite plage spectrale, un indice de réfraction supérieur à celui de l'eau;
   - au moins un dispositif émetteur de lumière (EL) agencé à l'intérieur dudit substrat, adapté pour émettre un rayonnement lumineux dans ladite plage spectrale en direction d'une surface (S) du substrat, ledit dispositif émetteur de lumière étant agencé de telle sorte qu'au moins une portion dudit rayonnement atteigne ladite surface avec un angle d'incidence supérieur ou égal à un angle limite de réflexion totale interne pour une interface entre ledit substrat et de l'eau ; et
   - au moins un masque opaque (MO), agencé à l'intérieur ou à la surface dudit substrat de manière à intercepter une portion dudit rayonnement qui, en l'absence dudit masque, atteindrait ladite surface avec un angle d'incidence inférieur audit angle limite.

2. Dispositif selon la revendication 1 dans lequel ledit ou au moins un dit dispositif émetteur de lumière (ELD, ELD1, ELD2) présente une émission lumineuse de type directionnel, avec un diagramme d'émission présentant un maximum suivant une direction oblique par rapport à ladite surface du substrat.

3. Dispositif selon la revendication 2 comprenant une pluralité de dits dispositifs émetteurs de lumière (ELD1, ELD2) présentant des émissions lumineuses de type directionnel avec des diagrammes d'émission présentant des maxima suivant des directions obliques respectives, différentes entre elles, par rapport à ladite surface du substrat.

4. Dispositif selon l'une des revendications précédentes comprenant :

   - soit une pluralité de dits dispositifs émetteurs de lumière (EL1, EL2, EL3), agencés de manière symétrique autour d'un axe (AS) perpendiculaire à ladite surface du substrat ;
   - soit un dit dispositif émetteur de lumière (ELA) en forme d'anneau.

5. Dispositif selon l'une des revendications précédentes comprenant une pluralité de dits dispositifs émetteurs de lumière (ELa, ELb, ELc) adaptés pour émettre ledit rayonnement lumineux dans des portions différentes de ladite plage spectrale.

6. Dispositif selon l'une des revendications précédentes comprenant également :

   - une première couche transparente (C1), agencée à la surface dudit substrat et présentant un indice de réfraction inférieur à celui dudit substrat, de telle sorte qu'au moins une portion du rayonnement lumineux émis par ledit ou lesdits dispositifs émetteurs de lumière atteigne une interface entre le substrat et la première couche transparente avec un angle d'incidence supérieur ou égal à un angle limite de réflexion totale interne pour cette interface ; et
   - une deuxième couche transparente (C2), agencée à la surface de ladite première couche transparente opposée audit substrat, présentant un indice de réfraction supérieur à celui de ladite première couche ;

   lesdites première et deuxième couche présentant des épaisseurs inférieures à au moins une longueur d'onde du rayonnement lumineux émis par ledit ou lesdits dispositifs émetteurs de lumière.

7. Dispositif selon l'une des revendications précédentes comprenant également une couche métallique (CM) déposée à sa surface éclairée par ledit ou lesdits dispositifs émetteurs de lumière.

8. Système de microscopie de fluorescence à onde évanescente comprenant :

   - un dispositif d'éclairage selon l'une des revendications précédentes ; et
   - un objectif de microscope (OBJ) agencé pour observer une surface (S) dudit dispositif d'éclairage, ou d'une lamelle de microscope posée sur ladite surface, et ayant un axe optique (AO) orthogonal à ladite surface et décalé par rapport au ou aux dispositifs émetteurs de lumière du dispositif d'éclairage.

9. Procédé d'éclairage pour microscopie de fluorescence à onde évanescente comprenant des étapes consistant à :

   - mettre un substrat (SB) transparent à la lumière dans au moins une plage spectrale en contact avec un milieu (MA) présentant, dans ladite plage spectrale, un indice de réfraction inférieur à celui dudit substrat ;
   - activer un dispositif émetteur de lumière (EL) agencé à l'intérieur dudit substrat transparent pour qu'il émette un rayonnement lumineux dans ladite plage spectrale en direction d'une surface (S) du substrat, ledit dispositif émetteur de lumière étant agencé de telle sorte qu'au moins une portion dudit rayonnement atteigne ladite surface avec un angle d'incidence supérieur ou égal à un angle limite de réflexion totale interne pour une interface entre ledit substrat et ledit milieu optique ;

moyennant quoi des ondes évanescentes (OE) sont générées à la surface dudit substrat.

10. Procédé selon la revendication 9 dans lequel au moins un masque opaque (MO) est agencé à l'intérieur ou à la surface dudit substrat de manière à intercepter une portion dudit rayonnement qui, en l'absence dudit masque, atteindrait ladite surface avec un angle d'incidence inférieur audit angle limite.

11. Procédé selon l'une des revendications 9 ou 10 dans lequel ledit milieu est aqueux.

12. Procédé selon l'une des revendications 9 à 11 dans lequel ledit ou au moins un dit dispositif émetteur de lumière présente une émission lumineuse de type directionnel, avec un diagramme d'émission présentant un maximum suivant une direction oblique par rapport à ladite surface du substrat.

13. Procédé selon l'une des revendications 9 à 12 dans lequel :

- une première couche transparente (C1) est agencée à la surface dudit substrat et présente un indice de réfraction inférieur à celui dudit substrat, de telle sorte qu'au moins une portion du rayonnement lumineux émis par ledit ou lesdits dispositifs émetteurs de lumière atteigne une interface substrat - première couche transparente avec un angle d'incidence supérieur ou égal à un angle limite de réflexion totale interne pour cette interface ; et

- une deuxième couche transparente (C2) est agencée à la surface de ladite première couche transparente opposée audit substrat et présente un indice de réfraction supérieur à celui de ladite première couche ;

lesdites première et deuxième couche présentant des épaisseurs inférieures à au moins une longueur d'onde du rayonnement lumineux émis par ledit ou lesdits dispositifs émetteurs de lumière.

14. Procédé selon l'une des revendications 9 à 13 dans lequel une couche métallique (CM) est agencée à la surface dudit substrat ou à sa proximité, de telle sorte que des plasmons de surface sont excités par lesdites ondes évanescentes.

15. Procédé selon l'une des revendications 9 à 14 dans lequel un échantillon (ECH) contenant au moins un fluorophore est amené en contact de la surface dudit substrat ou à sa proximité, de telle sorte qu'une émission fluorescente dudit fluorophore soit excitée par lesdites ondes évanescentes, ou des ondes évanescentes associées auxdits plasmons de surface, et dans lequel au moins une image de fluorescence dudit échantillon est acquise au moyen d'un objectif de microscope.

16. Procédé selon la revendication 15 dans lequel :

- ledit ou lesdits dispositifs émetteurs de lumière sont agencés de telle sorte que lesdites ondes évanescentes présentant des longueurs de pénétration différentes en correspondance de différents points de la surface dudit substrat ;
- ledit substrat est déplacé par rapport audit échantillon et une pluralité d'images de fluorescence sont acquises pour une pluralité de différentes positions relative entre l'échantillon et le substrat, de telle sorte qu'un même point de l'échantillon soit exposé à des ondes évanescentes de longueurs de pénétration différentes ;
- le procédé comprenant également une étape de reconstruction d'une image tridimensionnelle d'une distribution des fluorophores à l'intérieur de l'échantillon à partir desdites images de fluorescence.

**Patentansprüche**

1. Beleuchtungsvorrichtung für Fluoreszenzmikroskopie mit abklingender Welle, Folgendes beinhaltend:

- ein Substrat (SB), welches für Licht in mindestens einem Spektralband transparent ist und in dem Spektralband einen Brechungsindex aufweist, welcher denjenigen von Wasser überschreitet;
- mindestens eine Lichtemissionsvorrichtung (EL), welche innerhalb des Substrates angeordnet und geeignet ist, um eine Lichtstrahlung in dem Spektralbereich in Richtung einer Oberfläche (S) des Substrates auszusenden, wobei die Lichtemissionsvorrichtung so angeordnet ist, dass mindestens ein Teil der Strahlung die Oberfläche mit einem Einfallwinkel erreicht, welcher größer als oder gleich einem inneren Totalreflexions-Grenzwinkel für eine Schnittstelle zwischen dem Substrat und Wasser ist; und
- mindestens eine undurchsichtige Maske (MO), welche innerhalb des Substrates oder an dessen Oberfläche in einer Weise angeordnet ist, dass sie einen Teil der Strahlung abfängt, welche bei Nichtvorhandensein der Maske die Oberfläche mit einem Einfallwinkel erreichen würde, welcher kleiner als der Grenzwinkel ist.

2. Vorrichtung nach Anspruch 1, bei welcher die oder mindestens eine Lichtemissionsvorrichtung (ELD, ELD1, ELD2) eine Lichtemission vom direktionalen Typ aufweist, mit einem Emissionsdiagramm, welches ein Maximum in einer Richtung schräg in Bezug auf die Oberfläche des Substrates aufweist.

3. Vorrichtung nach Anspruch 2, beinhaltend eine Vielzahl von solchen Lichtemissionsvorrichtungen (ELD1, ELD2), welche Lichtemissionen vom direktionalen Typ aufweisen, mit Emissionsdiagrammen, welche Maxima in jeweiligen voneinander unterschiedlichen Richtungen schräg in Bezug auf die Oberfläche des Substrates aufweisen.

4. Vorrichtung nach einem der vorhergehenden Ansprüche, Folgendes beinhaltend:

     - entweder eine Vielzahl von solchen Lichtemissionsvorrichtungen (EL1, EL2, EL3), welche symmetrisch um eine Achse (AS) senkrecht zur Oberfläche des Substrates angeordnet ist;
     - oder eine Lichtemissionsvorrichtung (ELA) in Form eines Rings.

5. Vorrichtung nach einem der vorhergehenden Ansprüche, beinhaltend eine Vielzahl von solchen Lichtemissionsvorrichtungen (ELa, ELb, ELc), welche geeignet ist, die Lichtstrahlung in unterschiedlichen Teilen des Spektralbandes auszusenden.

6. Vorrichtung nach einem der vorhergehenden Ansprüche, außerdem Folgendes beinhaltend:

     - eine erste transparente Schicht (C1), welche an der Oberfläche des Substrates angeordnet ist und einen Brechungsindex unterhalb desjenigen des Substrates aufweist, sodass mindestens ein Teil der Lichtstrahlung, welche durch die Lichtemissionsvorrichtung(en) ausgesendet wird, eine Schnittstelle zwischen dem Substrat und der ersten transparenten Schicht mit einem Einfallwinkel erreicht, welcher größer als oder gleich einem inneren Totalreflexions-Grenzwinkel für diese Schnittstelle ist; und
     - eine zweite transparente Schicht (C2), welche an der dem Substrat abgewandten Oberfläche der ersten transparenten Schicht angeordnet ist, welche einen Brechungsindex aufweist, welche denjenigen der ersten Schicht überschreitet;
     wobei die erste und die zweite Schicht geringere Dicken als mindestens eine Wellenlänge der durch die Lichtemissionsvorrichtung(en) ausgesandten Lichtstrahlung aufweisen.

7. Vorrichtung nach einem der vorhergehenden Ansprüche, zudem beinhaltend eine Metallschicht (CM), welche an ihrer durch die Lichtemissionsvorrichtung(en) beleuchteten Oberfläche abgelagert ist.

8. Fluoreszenzmikroskopiesystem mit abklingender Welle, Folgendes beinhaltend:

     - eine Beleuchtungsvorrichtung nach einem der vorhergehenden Ansprüche; und
     - ein Mikroskopobjektiv (OBJ), welches angeordnet ist, um eine Oberfläche (S) der Beleuchtungsvorrichtung oder einen Mikroskop-Objektträger, welcher auf der Oberfläche abgelegt ist, zu beobachten, und welches eine zu der Oberfläche rechtwinklige und in Bezug auf die Lichtemissionsvorrichtung(en) der Beleuchtungsvorrichtung versetzte optische Achse (AO) aufweist.

9. Beleuchtungsverfahren für Fluoreszenzmikroskopie mit abklingender Welle, folgende Schritte beinhaltend:

     - Inkontaktbringen eines Substrates (SB), welches für Licht in mindestens einem Spektralband transparent ist, mit einem Medium (MA), welches in dem Spektralband einen Brechungsindex aufweist, welcher denjenigen des Substrates unterschreitet;
     - Aktivieren einer Lichtemissionsvorrichtung (EL), welche innerhalb des transparenten Substrates angeordnet ist, damit diese eine Lichtstrahlung in dem Spektralbereich in Richtung einer Oberfläche (S) des Substrates aussendet, wobei die Lichtemissionsvorrichtung so angeordnet ist, dass mindestens ein Teil der Strahlung die Oberfläche mit einem Einfallwinkel erreicht, welcher größer als oder gleich einem inneren Totalreflexions-Grenzwinkel für eine Schnittstelle zwischen dem Substrat und dem optischen Medium ist;
     wodurch abklingende Wellen (OE) an der Oberfläche des Substrates erzeugt werden.

10. Verfahren nach Anspruch 9, bei welchem mindestens eine undurchsichtige Maske (MO) innerhalb des Substrates oder an dessen Oberfläche in einer Weise angeordnet ist, dass sie einen Teil der Strahlung abfängt, welche bei Nichtvorhandensein der Maske die Oberfläche mit einem Einfallwinkel erreichen würde, welcher kleiner als der Grenzwinkel ist.

11. Verfahren nach einem der Ansprüche 9 oder 10, bei welchem das Medium wässrig ist.

12. Verfahren nach einem der Ansprüche 9 bis 11, bei welchem die oder mindestens eine Lichtemissionsvorrichtung eine Lichtemission vom direktionalen Typ aufweist, mit einem Emissionsdiagramm, welches ein Maximum in einer Richtung schräg in Bezug auf die Oberfläche des Substrates aufweist.

**13.** Verfahren nach einem der Ansprüche 9 bis 12, bei welchem:

- eine erste transparente Schicht (C1) an der Oberfläche des Substrates angeordnet ist und einen Brechungsindex unterhalb desjenigen des Substrates aufweist, sodass mindestens ein Teil der Lichtstrahlung, welche durch die Lichtemissionsvorrichtung(en) ausgesendet wird, eine Schnittstelle Substrat - erste transparente Schicht mit einem Einfallwinkel erreicht, welcher größer als oder gleich einem inneren Totalreflexions-Grenzwinkel für diese Schnittstelle ist; und

- eine zweite transparente Schicht (C2), an der dem Substrat abgewandten Oberfläche der ersten transparenten Schicht angeordnet ist, welche einen Brechungsindex aufweist, welche denjenigen der ersten Schicht überschreitet; wobei die erste und die zweite Schicht geringere Dicken als mindestens eine Wellenlänge der durch die Lichtemissionsvorrichtung(en) ausgesandten Lichtstrahlung aufweisen.

**14.** Verfahren nach einem der Ansprüche 9 bis 13, bei welchem eine Metallschicht (CM) an der Oberfläche des Substrates oder in dessen Nähe angeordnet ist, sodass Oberflächenplasmonen durch die abklingenden Wellen angeregt werden.

**15.** Verfahren nach einem der Ansprüche 9 bis 14, bei welchem eine Probe (ECH), beinhaltend mindestens ein Fluorophor, in Kontakt mit der Oberfläche des Substrates oder in dessen Nähe gebracht wird, sodass eine Fluoreszenzemission des Fluorophors durch die abklingenden Wellen angeregt wird, oder durch abklingende Wellen, welche den Oberflächenplasmonen zugeordnet sind, und bei welchem mindestens ein Fluoreszenzbild der Probe mithilfe eines Mikroskopobjektivs erfasst wird.

**16.** Verfahren nach Anspruch 15, bei welchem:

- die Lichtemissionsvorrichtung(en) so angeordnet ist/sind, dass die abklingenden Wellen, unterschiedliche Penetrationslängen übereinstimmend mit unterschiedlichen Punkten der Oberfläche des Substrates aufweisen;

- das Substrat in Bezug auf die Probe bewegt wird und eine Vielzahl von Fluoreszenzbildern für eine Vielzahl unterschiedlicher relativer Positionen zwischen der Probe und dem Substrat in einer Weise erfasst wird, dass ein gleicher Punkt der Probe abklingenden Wellen unterschiedlicher Penetrationslänge gegenüber exponiert wird;

- wobei das Verfahren außerdem einen Schritt der Rekonstruktion eines dreidimensionalen Bildes einer Verteilung der Fluorophore innerhalb der Probe anhand der Fluoreszenzbilder beinhaltet.

**Claims**

**1.** A lighting device for total-internal-reflection fluorescence microscopy comprising:

- a substrate (SB) that is transparent to light in at least one spectral range and that has, in said spectral range, a refractive index higher than that of water;

- at least one light-emitting device (EL) arranged in the interior of said substrate, suitable for emitting light radiation in said spectral range in the direction of a surface (S) of the substrate, said light-emitting device being arranged such that at least one portion of said radiation reaches said surface with an angle of incidence larger than or equal to a critical angle of total internal reflection for an interface between said substrate and water; and

- at least one opaque mask (MO), arranged in the interior or on the surface of said substrate so as to intercept a portion of said radiation that, in the absence of said mask, would reach said surface with an angle of incidence smaller than said critical angle.

**2.** The device according to claim 1, wherein said or at least one said light-emitting device (ELD, ELD1, ELD2) has a light emission of directional type, with an emission pattern having a maximum in a direction that is oblique with respect to said surface of the substrate.

**3.** The device according to claim 2, comprising a plurality of said light-emitting devices (ELD1, ELD2) having light emissions of directional type, with emission patterns having maxima in respective directions that are different from one another and that are oblique with respect to said surface of the substrate.

**4.** The device according to any one of the preceding claims comprising:

- either a plurality of said light-emitting devices (EL1, EL2, EL3), arranged symmetrically about an axis (AS) perpendicular to said surface of the substrate;

- or a said light-emitting device (ELA) of ring shape.

**5.** The device according to any one of the preceding claims, comprising a plurality of said light-emitting devices (ELa, ELb, ELc) suitable for emitting said light radiation in different portions of said spectral range.

6. The device according to any one of the preceding claims, also comprising:

- a first transparent layer (C1), arranged on the surface of said substrate and having a refractive index lower than that of said substrate, such that at least one portion of the light radiation emitted by said one or more light-emitting devices reaches an interface between the substrate and the first transparent layer with an angle of incidence larger than or equal to a critical angle of total internal reflection for this interface; and
- a second transparent layer (C2), arranged on the surface of said first transparent layer opposite said substrate and having a refractive index higher than that of said first layer; said first and second layer having thicknesses smaller than at least one wavelength of the light radiation emitted by said one or more light-emitting devices.

7. The device according to any one of the preceding claims, also comprising a metal layer (CM) deposited on the surface thereof illuminated by said one or more light-emitting devices.

8. A total-internal-reflection fluorescence microscopy system comprising:

- a lighting device according to any one of the preceding claims; and
- a microscope objective (OBJ) arranged to observe a surface (S) of said lighting device, or of a microscope slide placed on said surface, and having an optical axis (AO) orthogonal to said surface and shifted with respect to the one or more light-emitting devices of the lighting device.

9. A lighting method for total-internal-reflection fluorescence microscopy comprising steps of:

- placing a substrate (SB) that is transparent to light in at least one spectral range in contact with a medium (MA) having, in said spectral range, a refractive index lower than that of said substrate;
- activating a light-emitting device (EL) arranged in the interior of said transparent substrate so that it emits light radiation in said spectral range in the direction of a surface (S) of the substrate, said light-emitting device being arranged such that at least one portion of said radiation reaches said surface with an angle of incidence larger than or equal to a critical angle of total internal reflection for an interface between said substrate and said optical medium;
by means of which evanescent waves (OE) are generated at the surface of said substrate.

10. The method according to claim 9, wherein at least one opaque mask (MO) is arranged in the interior or on the surface of said substrate so as to intercept a portion of said radiation that, in the absence of said mask, would reach said surface with an angle of incidence smaller than said critical angle.

11. The method according to any one of claims 9 or 10, wherein said medium is aqueous.

12. The method according to any one of claims 9 to 11, wherein said or at least one said light-emitting device has a light emission of directional type, with an emission pattern having a maximum in a direction that is oblique with respect to said surface of the substrate.

13. The method according to any one of claims 9 to 12, wherein:

- a first transparent layer (C1) is arranged on the surface of said substrate and has a refractive index lower than that of said substrate, such that at least one portion of the light radiation emitted by said one or more light-emitting devices reaches a substrate/first transparent layer interface with an angle of incidence larger than or equal to a critical angle of total internal reflection for this interface; and
- a second transparent layer (C2) is arranged on the surface of said first transparent layer opposite said substrate and has a refractive index higher than that of said first layer; said first and second layer having thicknesses smaller than at least one wavelength of the light radiation emitted by said one or more light-emitting devices.

14. The method according to any one of claims 9 to 13, wherein a metal layer (CM) is arranged on the surface of said substrate or in proximity thereto, such that surface plasmons are excited by said evanescent waves.

15. The method according to any one of claims 9 to 14, wherein a sample (ECH) containing at least one fluorophore is brought into contact with the surface of said substrate or into proximity thereto, such that a fluorescent emission of said fluorophore is excited by said evanescent waves, or evanescent waves associated with said surface plasmons, and wherein at least one fluorescence image of said sample is acquired by means of a microscope objective.

**16.** The method according to claim 15, wherein:

- said one or more light-emitting devices are arranged such that said evanescent waves have different penetration lengths matching various points on the surface of said substrate;
- said substrate is moved with respect to said sample and a plurality of fluorescence images are acquired for a plurality of various relative positions between the sample and the substrate, such that a given point of the sample is exposed to evanescent waves of different penetration lengths;
- the method also comprising a step of reconstructing a three-dimensional image of a distribution of the fluorophores in the interior of the sample on the basis of said fluorescence images.

MA

S

OE

z

$n_1$

$n_2 > n_1$

$n_2$

SB

$\theta > \theta_c$

FLR

FLI

# FIG.1A

MA

SB

OBJ

FLR

FLI

# FIG.1B

OBJ

MA

SB

PR

FLI

FLR

# FIG.1C

EP 3 465 320 B1

FIG.2

δ~290nm

θ=62°

FIG.3A

δ~90nm

θ=67°

FIG.3B

MO

FIG.3C

FIG.4

14

MO    LM

S

SB

ELD2

ELD1

# FIG.5

MA

C2    $n_1$

OE    MG

$e_{c2}$    $n_{c2}$

C1

$e_{c1}$    $n_{c1}$

OE1

SB    $n_s$

ELD

# FIG.6A

$\lambda$(nm)

0,52

0,5

0,48

0,46

0,44

10

5

0

-5

62    64    66    68

$\theta$(°)

# FIG.6B

FIG.6C

FIG.7

FIG.8A

FIG.8B

FIG.9

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE A. HASSANZADEH et al.** Waveguide evanescent field fluorescence microscopy : Thin film fluorescence intensifies and its application in cell biology. *Applied Physics Letters,* 2008, vol. 92, 233503
- **DE A. ASANOV et al.** A novel form of Total Internal Reflection Fluorescence Microscopy (LG-TIRFM) reveals different and independent lipid raft domains in living cells. *Biochimica et Biophysica Acta,* 2010, vol. 1801, 147-155
- **DE S. RAMACHANDRAN et al.** High performance, LED powered, waveguide based total internal reflection microscopy». *Scientific reports,* 2013, vol. 3, 2133
- Surface Plasmon Enhanced TIRF Imaging. **DE K. BALAA ; E. FORT.** Imaging & Microscopy. Octobre 2009